# EUROPÄISCHE PATENTSCHRIFT

(11) **EP 1 421 410 B1**
(45) Veröffentlichungstag und Bekanntmachung des Hinweises auf die Patenterteilung: **12.01.2005**
(21) Anmeldenummer: 02767111.4
(22) Anmeldetag: 09.08.2002
(51) Int. Cl.: G01S 17/93, G01S 7/481, G02B 26/12

(54) **VORRICHTUNG ZUR ENTFERNUNGSMESSUNG**
DEVICE FOR DISTANCE MEASUREMENT
DISPOSITIF DE MESURE A DISTANCE

(30) Priorität: 09.08.2001 DE 10139237
(43) Veröffentlichungstag der Anmeldung: 26.05.2004
(73) Patentinhaber: Conti Temic Microelectronic GmbH, 90411 Nürnberg (DE)
(72) Erfinder: FRICK, Rainer, 82140 Olching (DE)
(86) Internationale Anmeldenummer: PCT/DE2002/003026
(87) Internationale Veröffentlichungsnummer: WO 2003/016945

(56) Entgegenhaltungen:
- DE-A- 4 115 747
- DE-A- 19 713 826
- US-A- 5 293 162

## Beschreibung

Die Erfindung betrifft eine Vorrichtung zur Messung der Entfernung zu einem von einem Lichtstrahl beleuchteten Objekt gemäß dem Oberbegriff des Patentanspruches 1.

In Überwachungssystemen von Kraftfahrzeugen zur Messung von Abständen zu Hindernissen oder vorausfahrenden Fahrzeugen werden unterschiedliche Verfahren eingesetzt, die als Messmedium Radarimpulse, Mikrowellen, Ultraschallwellen oder Infrarotstrahlung verwenden. Als Messmethoden zur Bestimmung des Abstandes kann entweder auf die Messung der Laufzeit oder auf eine Triangulationsmethode zurückgegriffen werden.

So ist beispielsweise aus der DE 19704220 A1 eine Vorrichtung zum bestimmen des Abstandes eines Hindernisses von einem Fahrzeug bekannt, bei der als Sendevorrichtung zum Aussenden von Abtastimpulsen Halbleiter-Laser, ein Radarsender oder ein Ultraschallgeber verwendet wird. Mit einer Empfangsvorrichtung wird das an einem Hindernis reflektierte Sendesignal detektiert und mit einer Zeitmesseinheit zum Erfassen der Zeit zwischen dem Aussenden des Sendesignals und dessen Detektionszeitpunktes der Abstand zum Hindernis bestimmt.

Des weiteren ist aus der DE 19713826 A1 eine Radarvorrichtung für ein Fahrzeugsicherheitsabstands-Steuersystem bekannt, das einen zweidimensionalen Abtastvorgang unter Verwendung eines sich drehenden Polygonspiegels durchführt, um beispielsweise relative Daten, wie z.B. einen Abstand, eine Richtung oder eine Geschwindigkeit eines vorausfahrenden Fahrzeuges zu bestimmen. Bei dieser Vorrichtung wird ein Infrarotimpulsstrahl der von einer Laserdiode abgegeben wird, von einem Reflexionsspiegel auf den rotierenden Polygonspiegel reflektiert, der eine Mehrzahl von mit unterschiedlichen Winkeln geneigten Spiegelflächen aufweist, so dass dadurch ein bestimmter Messbereich von dem Sendestrahl zeilenweise aufgrund der unterschiedlich geneigten Spiegelflächen des Polygonspiegels abgescannt wird. Falls sich in diesem Messbereich ein Objekt befindet, wird der dort reflektierte Sendestrahl von einem Detektorelement erfasst. Der zweidimensionale Abtastvorgang erfolgt dadurch, dass ein Pulsstrahl auf jede Spiegelfläche des Polygonspiegels gerichtet wird, wobei die Richtung der von jeder Spiegelfläche reflektierten Strahlen durch drehen des Polygonspiegels derart verändert wird, dass ein horizontaler Abtastvorgang in der Waagerechten zu Stande kommt. Durch Erhöhung der Impulsfrequenz kann die Abtastrate in einer Zeile erhöht werden. Wenn der Pulsstrahl von einer nächsten Spiegelfläche reflektiert wird, wird der horizontale Abtastvorgang in einer unterschiedlichen Höhenstellung, die proportional zu dem Neigungswinkel jeder Spiegelfläche ist, wiederholt. Dieser Abtastvorgang wird an unterschiedlichen Stellen der Höhenrichtung wiederholt, so dass damit ein zweidimensionaler Abtastvorgang realisiert wird. Die Anzahl der dabei entstehenden unterschiedlichen Höhenrichtungen, also der Anzahl der Zeilen, hängt von der Anzahl der mit unterschiedlichen Neigungen bezüglich der Drehachse des Polygonspiegels vorgesehenen Spiegelflächen.

Wird eine solche Messvorrichtung in einem Fahrzeug verwendet, ist es möglich den Abtastvorgang zur Erkennung eines vorausfahrenden Fahrzeuges an den Neigungsverlauf der Strasse anzupassen. Steigt z.B. die Strasse vor dem Fahrzeug an, wird auch die Position eines vorausfahrenden Fahrzeuges höher sein als diejenige des mit der Messvorrichtung ausgestatteten Fahrzeuges. Um auch in dieser Konstellation das von dem, vorausfahrenden Fahrzeug reflektierte Sendesignal sicher detektieren zu können, wird die Anzahl der Messungen in der entsprechenden Höhenrichtung erhöht, d.h. die Impulsfrequenz für das Sendesignal erhöht. Um eine solche Steuerung der Impulsfrequenz des Sendesignals durchführen zu können, liefert ein in dem Fahrzeug installierter Neigungswinkel-Sensor einen entsprechenden Messwert.

Nachteilig bei dieser bekannten Messvorrichtung ist zum einen die aufwendig zu realisierende zeitliche Steuerung, bei der in Abhängigkeit der Drehwinkelstellung des Polygonspiegels von dem Sender ein Impulsstrahl mit der richtigen Impulsfrequenz erzeugt werden muss und zum anderen ein Sender erforderlich ist, mit dem die entsprechenden lmpulsfrequenzen realisierbar sind.

Daher besteht die Aufgabe der vorliegenden Erfindung darin, dass die eingangs genannte Vorrichtung zur Messung der Entfernung hinsichtlich einer einfacheren Auswertung der detektierten Lichtstrahlen verbessert wird.

Diese Aufgabe wird gemäß den Merkmalen des Patentanspruches 1 gelöst, wonach als Empfangsvorrichtung des an einem Objekt reflektierten Lichtstrahls ein sich drehender Polygonspiegel mit einer Mehrzahl von mit einem bestimmten Winkel gegen die Drehachse des sich drehenden Polygonspiegels geneigten Spiegelflächen vorgesehen ist und der reflektierte Lichtstrahl mittels einer jeder Spiegelfläche des Polygonspiegels zugeordneten Optik die synchron mit demselben rotiert, über eine solche Spiegelfläche auf das Detektorelement fokussiert wird.

Mit dieser erfindungsgemäßen Vorrichtung lassen sich aus dem detektierten, an einem im Messbereich sich befindenden Objekt reflektierten kontinuierlichen Lichtstrahl mittels der Laufzeitmethode sowohl die Entfernung als auch die zugehörige Position des Objektes aufgrund der Winkelstellung des Polygonspiegels ableiten.

Die jeder Spiegelfläche des Polygonspiegels zugeordnete Optik besteht vorzugsweise aus einem Linsensystem, insbesondere einer einzigen Linse. Damit ergibt sich für die gesamte Empfangsanordnung ein einfacher Aufbau. Bei einem weiteren bevorzugten Ausführungsbeispiel der Erfindung befinden sich die den Spiegelflächen zugeordneten Optiken näherungsweise auf einer Kreislinie um die Drehachse des Polygonspiegels, wobei zwischen benachbarten Optiken, also im Bereich der Kanten des Polygonspiegels Abschirmungen angeordnet sind. Damit ergibt sich hinsichtlich des Detektorelementes ein definierter Öffnungswinkel, so dass der zusammen mit den Optiken und den Abschirmungen rotierende Polygonspiegel mit diesem Öffnungswinkel den Messbereich, also den von der Lichtquelle bestrahlten Bereich abtastet. Des weiteren wird dadurch sichergestellt, dass nicht gleichzeitig zwei aufeinanderfolgende Spiegelflächen von reflektierten Lichtstrahlen getroffen werden. Der erfindungsgemäße Polygonspiegel kann in Abhängigkeit der gewünschten Auflösung mit 3, 4 oder 5 Spiegelflächen versehen werden, wobei sich es als vorteilhaft erwiesen hat, die Abschirmungen jeweils derart auszubilden, dass ein Öffnungswinkel von 60° erzeugt wird.

Mit der erfindungsgemäßen Vorrichtung lässt sich ein einfaches Verfahren zur Entfernungsmessung durchführen, bei dem ein kontinuierlich emittierter und modulierter Lichtstrahl einen zu überwachenden Raumbereich als Messbereich bestrahlt und durch Phasenvergleich mit dem detektierten, an einem Objekt reflektierten Lichtstrahl die Entfernung des Objektes und mittels der Winkelstellung des Polygonspiegels die Position dieses Objektes abgeleitet wird.

Eine weitere Verbesserung des Verfahrens wird dadurch erreicht, dass der Lichtstrahl durch Modulation mit einem Pseudo-Rausch-Signal erzeugt wird. Mit einem solchermaßen modulierten Lichtstrahl lässt sich eine gute Störsignalunterdrückung erzielen, indem mittels Korrelation zwischen dem Pseudo-Rausch-Signal und dem detektierten Signal die Entfernung und die Position des Objektes, an dem der Lichtstrahl reflektiert, bestimmt wird.

Im folgenden wird die Erfindung anhand eines Ausführungsbeispieles im Zusammenhang mit den beiliegenden Zeichnungen näher erläutert. Es zeigen:
- Figur 1: eine schematische Darstellung einer erfindungsgemäßen Vorrichtung zur Messung der Entfernung mit dem Strahlengang eines von einer Sendeeinrichtung erzeugten Lichtstrahles,
- Figur 2: eine Draufsicht der Anordnung nach Figur 1,
- Figur 3: eine Seitenansicht der Anordnung nach Figur 1 und
- Figur 4: ein schematisches Blockschaltbild zur Erläuterung der Funktionsweise der Anordnung mit der erfindungsgemäßen Vorrichtung nach Figur 1.

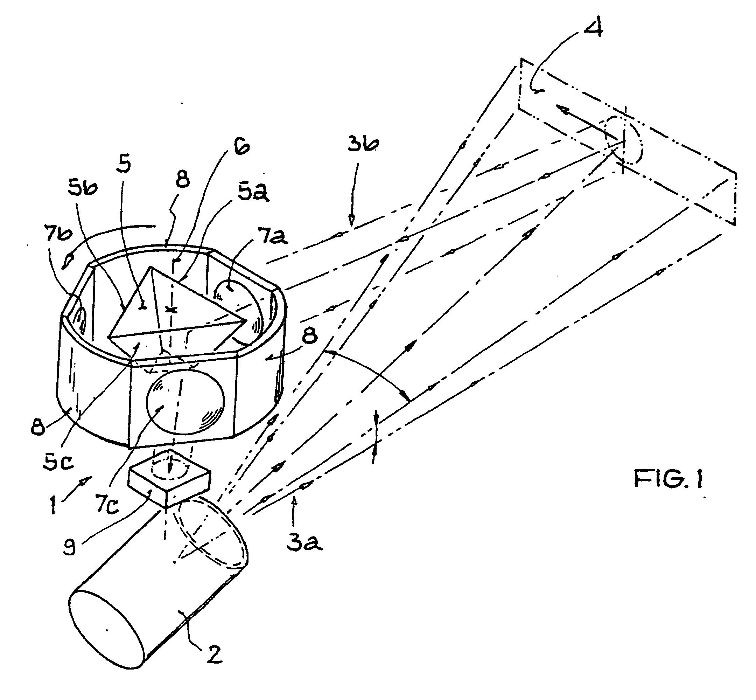

Die Anordnung nach Figur 1 zeigt eine erfindungsgemäße Vorrichtung 1 zum Empfang eines von einer Sendevorrichtung 2 erzeugten Lichtstrahles 3a, der auf einen Raumbereich 4 gerichtet ist und dort an einem Objekt zur Bestimmung dessen Abstandes zu der Empfangsvorrichtung 1 reflektiert wird.

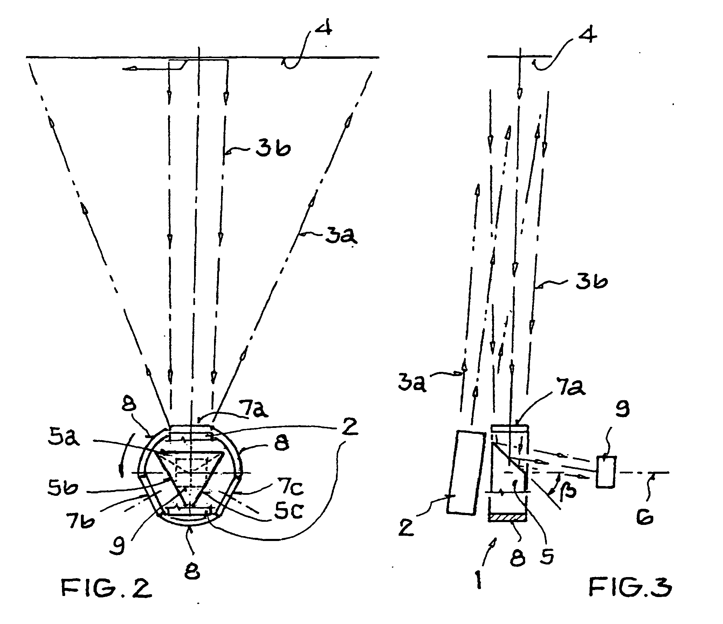

Die Sendevorrichtung 2 enthält als Lichtquelle einen Halbleiter-Laser zur Erzeugung eines Infrarotlichtstrahles 3a, der als Sendesignal auf den Raumbereich 4 als Messbereich gerichtet ist und dort an einem Objekt, dessen Entfernung zu bestimmen ist (nicht dargestellt), reflektiert wird, um dann als reflektierter Lichtstrahl 3b von der Empfangsvorrichtung 1 detektiert zu werden. Diese Empfangsvorrichtung 1 enthält als zentrale Komponente um eine Drehachse 6 rotierenden Polygonspiegel 5 mit drei Spiegelflächen, die wie in den Figuren 1 und 2 gezeigt, ein gleichzeitiges Dreieck bilden. Des weiteren rotiert mit diesem Polygonspiegel 5 ein Linsensystem 7, bestehend aus drei optischen Linsen 7a, 7b und 7c die jeweils gegenüber einer Spiegelfläche des Polygonspiegels 5 angeordnet sind. In der in Figur 1 gezeigten Winkelstellung des Polygonspiegels 5 wird der reflektierte Lichtstrahl 3b mittels der Linse 7a über die dieser Linse gegenüberstehenden Spiegelfläche des Polygonspiegels 5 auf ein Detektorelement 9 fokussiert, das in Richtung der Drehachse 6 des Polygonspiegels 5 angeordnet ist. Wie in Figur 3 dargestellt, ist hierzu diese Spiegelfläche 5a des Polygonspiegels 5 derart geneigt, dass nach Umlenkung des reflektierten Lichtstrahles 3b an dieser Spiegelfläche 5a dieser Lichtstrahl 3b auf das Detektorelement 9 trifft. Die anderen beiden Spiegelflächen 5b und 5c dieses Polygonspiegels 5 weisen die gleiche Neigung auf, so dass bei einer Rotation dieser Empfangsvorrichtung dieser reflektierte Lichtstrahl 3b auch von diesen anderen Spiegelflächen auf dieses Detektorelement 9 umgelenkt wird.

Zwischen den optischen Linsen 7a, 7b und 7c sind jeweils Abschirmungen 8 kreislinienförmig um den Polygonspiegel 5 angeordnet, um dadurch mit einem definierten Öffnungswinkel α den Messbereich 4 abzutasten, wie dies in Figur 2 dargestellt ist. Ohne diese Abschirmungen 8 ergäbe sich aufgrund des ein gleichseitiges Dreieck darstellenden Querschnittes des Polygonspiegels 5 ein Öffnungswinkel von 120°, wobei es dann nachteilig wäre, dass bei einer bestimmten Winkelstellung des Polygonspiegels, gleichzeitig auf zwei benachbarte Spiegelflächen ein Lichtstrahl empfangen werden könnte. Daher ist es vorteilhaft, diese Abschirmungen 8 derart auszubilden, dass der Öffnungswinkel α beispielsweise 60° beträgt. Aufgrund der Rotation der Empfangsanordnung 1 wird der Raumbereich 4 mit einem Öffnungswinkel α abgetastet und dabei der reflektierte Lichtstrahl auf das Empfangselement 9 fokussiert, aus dessen Empfangssignal beispielsweise mittels einer Phasenlaufzeitmethode die Entfernung eines Objektes und aus der Winkelstellung des Polygonspiegels die zugehörige Position ermittelt wird. Das Auflösungsvermögen dieser Anordnung kann erhöht werden, wenn anstelle des 3-seitigen Polygonspiegels 5 ein Polygonspiegel mit 4 oder 5 Spiegelflächen verwendet wird, wobei gleichzeitig mit den beschriebenen Abschirmungen 8 ein Öffnungswinkel von ebenfalls 60° realisierbar ist.

Wird die Anordnung nach Figur 1 im Bereich des Kühlergrills eines Kraftfahrzeuges angeordnet, so ist es von Vorteil, dass die Sendevorrichtung 2 so ausgerichtet ist, dass der Lichtstrahl 3a mit einem Öffnungswinkel von ca. 45° mit einem Winkel von 8° in vertikaler Richtung auf den Messbereich 4 gerichtet ist.

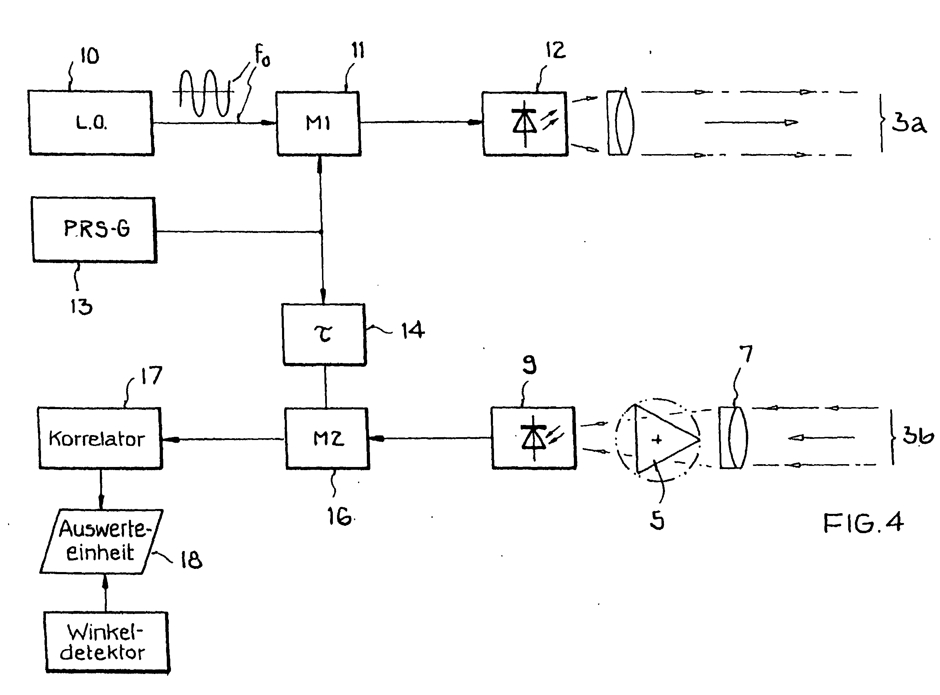

Mit dem Blockschaltbild gemäß Figur 4 soll ein Verfahren zur Entfernungsmessung unter Verwendung der Anordnung nach Figur 1 beschrieben werden. Wie oben schon erwähnt, enthält die Sendevorrichtung 2 eine Halbleiter-Laserdiode oder eine Infrarotsendediode mit einer Ansteuerschaltung. Zur Ansteuerung einer solchen Diode 12 der Sendevorrichtung 2 zur Erzeugung eines kontinuierlichen und modulierten Sendesignals wird mittels eines Oszillators (L.O.) 10 als Signalquelle ein Trägersignal mit einer Frequenz f₀ erzeugt, das von einem Modulator (M1) 11 entsprechend einem von einem Pseudo-Rauschsignal-Generator (PRS-G) 13 erzeugten Pseudo-Rauschfolge moduliert wird. Mit diesem derart modulierten Trägersignal wird die Sendediode 12 der Sendevorrichtung 2 angesteuert, die dadurch ein Pseudo-Rauschsignal als Sendesignal erzeugt, das als Lichtstrahl 3a auf den Messbereich 4 gerichtet wird.

Das als Lichtstrahl 3b reflektierte Signal wird mittels der optischen Linse 7 über dem Polygonspiegel 5 auf das Detektorelement 9 fokussiert, das ein entsprechendes Empfangssignal erzeugt.

Dieses Empfangssignal wird gegebenenfalls verstärkt und einem Mischer (M2) 16 zwecks Mischung mit dem mittels einer Verzögerungsschaltung 14 verzögerten Pseudo-Rauschsignal des Pseudo-Rauschsignal-Generator 13 zugeführt. Das derart erzeugte Signal wird zur Bestimmung der Korrelation zwischen dem Sende- und Empfangssignal an einen Korrelator 17 weitergeleitet, dessen Korrelationsergebnis von einer Auswerteeinheit 18 zur Bestimmung der Entfernung ausgewertet wird. Zusammen mit dem Winkel des von einem Detektor 19 erfassten Winkelstellung der Empfangsanordnung 1 gemäß Figur 1 bestimmt die Auswerteeinheit 18 auch die Richtung eines im Messbereich 4 detektierten Objekts.

Die von dem Pseudo-Rauschsignal-Generator 13 erzeugte Pseudo-Rauschsignalfolge dient neben der Erzeugung des modulierten Sendesignals gleichzeitig auch als Referenzsignal, das mit dem empfangenen Messsignal verglichen wird. Das Ergebnis dieses Vergleichs liefert eine quantitative Aussage über den Abstand zu einem detektierten Objekt. Die Verwendung der Autokorrelation zur messtechnischen Auswertung des empfangenen Lichtsignals führt aufgrund der hohen Filterwirkung hinsichtlich von Störsignalen, insbesondere bei Einsatz im Kfz-Bereich zu einer hohen Störunanfälligkeit, da Störsignale, die von Anordnungen ähnlicher Bauart im Kfz-Bereich erzeugt werden, typischerweise wenig Ähnlichkeit mit dem verwendeten Messsignal aufweisen.

Daher lässt sich die Anordnung nach Figur 1 zusammen mit dem beschriebenen Messprinzip der Autokorrelation mit Vorteil nicht nur zur Messung des Abstandes zu einem vorausfahrenden Fahrzeug sondern auch zur Abstandsregelung oder in Pre-Crash-Systemen verwenden.

## Patentansprüche

1. Vorrichtung (1) mit einem Detektorelement (9) zum Empfang eines an einem Objekt reflektierten Lichtstrahles (3a, 3b), wobei Mittel (7,5) zur Umlenkung des reflektierten Lichtstrahls (3b) auf das Detektorelement (9) vorgesehen sind, **dadurch gekennzeichnet, dass** als Mittel zur Ablenkung des reflektierten Lichtstrahls (3b) ein sich drehender Polygonspiegel (5) mit einer Mehrzahl von mit einem bestimmten Winkel (β) gegen die Drehachse (6) des sich drehenden Polygonspiegels (5) geneigten Spiegelflächen (5a, 5b, 5c) vorgesehen ist, wobei das Detektorelement (9) in Richtung der Drehachse (6) des Polygonspiegels (5) angeordnet ist und zur Fokussierung des reflektierten Lichtstrahls (3b) auf das Detektorelement (9) jeder Spiegelfläche (5a, 5b, 5c) des Polygonspiegels (5) eine Optik (7) zugeordnet ist, die synchron mit dem Polygonspiegel (5) rotiert.

2. Vorrichtung nach Anspruch 1 **dadurch gekennzeichnet, dass** die Optik (7) als Linsensystem ausgebildet ist.

3. Vorrichtung nach Anspruch 1 oder 2, **dadurch gekennzeichnet, dass** die Optiken (7a, 7b, 7c) näherungsweise auf einer Kreislinie um die Drehachse (6) des Polygonspiegels (5) angeordnet sind und zwischen benachbarten Optiken (7a, 7b, 7c) auf der Kreislinie Abschirmungen (8) vorgesehen sind.

4. Vorrichtung nach einem vorangehenden Ansprüche, **dadurch gekennzeichnet, dass** der Polygonspiegel (5) wenigstens 3 Spiegelflächen (5a, 5b, 5c) aufweist.

5. Vorrichtung nach Anspruch 3 oder 4, **dadurch gekennzeichnet, dass** bei einem Polygonspiegel (5) mit 3, 4 oder 5 Spiegelflächen (5a, 5b, 5c) die Abschirmung (8) für die Spiegelflächen (5a) jeweils einen Öffnungswinkel (α) von 60° erzeugen.

6. Verfahren zur Entfernungsmessung mittels der Vorrichtung nach einem der vorangehenden Ansprüche, **dadurch gekennzeichnet, dass** ein kontinuierlich emittierter und modulierter Lichtstrahl (3a) einen zu überwachenden Raumbereich (4) bestrahlt und durch Phasenvergleich dieses modulierten Lichtstrahls (3a) mit dem detektierten Lichtstrahl (3b) die Entfernung eines in dem zu überwachenden Raumbereich (4) sich befindenden Objektes und mittels der Winkelstellung des Polygonspiegels (5) die Position dieses Objektes bestimmt wird.

7. Verfahren nach Anspruch 6, **dadurch gekennzeichnet, dass** zur Modulation des Lichtstrahls (3a) eine Pseudo-Rauschsignalfolge verwendet wird.

## Claims

1. Device (1) with a detector element (9) for receiving a light beam (3a, 3b) reflecting on an object, wherein means (7, 5) for deflecting the reflected light beam (3b) to the detector element (9) are provided, **characterized in that** as a means for deflecting the reflected light beam (3b) a self-rotating polygonal mirror (5) with a plurality of mirror surfaces (5a, 5b, 5c) that are bent at a given angle (B) against the rotational axis (6) of the self-rotating polygonal mirror (5) are provided, the detector element (9) being arranged in direction of the rotational axis (6) of the polygonal mirror (5) and **in that** for focussing the reflected light beam (3b) onto the detector element (9) an optics system (7) being associated to each mirror surface (5a, 5b, 5c) of the polygonal mirror (5), which optics system (7) rotates synchronously with the polygonal mirror (5).

2. Device according to claim 1, **characterized in that** the optics (7) is formed as optical lenses.

3. Device according to claim 1 or 2, **characterized in that** the optical lenses (7a, 7b, 7c) are approximately arranged on a circular line around the rotational axis (6) of the polygonal mirror (5) and that on the circular line screenings (8) are provided between adjacent optical lenses (7a, 7b, 7c).

4. Device according to one of the preceding claims, **characterized in that** the polygonal mirror (5) comprises at least 3 mirror surfaces (5a, 5b, 5c).

5. Device according to claim 3 or 4, **characterized in that** with a polygonal mirror (5) with 3, 4 or 5 mirror surfaces (5a, 5b, 5c) the screenings (8) for the mirror surfaces (5a) each produce a flare angle (α) of 60°.

6. Method for distance measurement by means of the device according to one of the preceding claims, **characterized in that** a continuously emitted and modulated light beam (3a) irradiates an area (4) to be monitored and that by comparing the phases of said modulated light beam (3a) with the detected light beam (3b) the distance of an object located in the area (4) to be monitored and by means of the angular position of the polygonal mirror (5) the position of this object is determined.

7. Method according to claim 6, **characterized in that** for modulating the light beam (3a) a pseudo noise signal sequence is used.

## Revendications

1. Dispositif (1) avec un élément détecteur (9) pour la réception d'un rayon lumineux (3a, 3b) reflété par un objet, où des moyens (7, 5) sont prévus pour la déflection du rayon lumineux reflété (3b) sur l'élément détecteur (9), **caractérisé en ce qu'**un miroir polygonal (5) rotatif avec une pluralité de surfaces réflectrices (5a, 5b, 5c) inclinées selon un angle défini (β) par rapport à l'axe de rotation (6) du miroir polygonal rotatif (5) est prévu comme moyen pour la déflection du rayon lumineux reflété (3b), l'élément détecteur (9) étant disposé dans le sens de l'axe de rotation (6) du miroir polygonal (5) et une optique (7) étant attribuée à chaque surface réflectrice (5a, 5b, 5c) pour la focalisation du rayon lumineux reflété (3b) sur l'élément détecteur (9), la rotation de ladite optique étant synchronisée avec celle du miroir polygonal (5).

2. Dispositif selon la revendication 1, **caractérisé en ce que** l'optique (7) est formée en tant que système à lentille.

3. Dispositif selon la revendication 1 ou 2, **caractérisé en ce que** les optiques (7a, 7b, 7c) sont disposées approximativement sur un cercle autour de l'axe de rotation (6) du miroir polygonal (5) et des écrans (8) sont prévus entre les optiques voisines (7a, 7b, 7c) sur le cercle.

4. Dispositif selon l'une des revendications précédentes, **caractérisé en ce que** le miroir polygonal (5) présente au moins 3 surfaces réflectrices (5a, 5b, 5c).

5. Dispositif selon la revendication 3 ou 4, **caractérisé en ce que**, pour un miroir polygonal (5) à 3, 4 ou 5 surfaces réflectrices (5a, 5b, 5c), chaque écran (8) pour les surfaces réflectrices (5a) génère un angle d'ouverture (α) de 60 °.

6. Procédé de mesure de distance au moyen du dispositif selon l'une des revendications précédentes, **caractérisé en ce qu'**un rayon lumineux (3a) émis et modulé de manière continue irradie un espace à surveiller (4), et la distance d'un objet se trouvant dans l'espace à surveiller (4) est déterminée par comparaison de phase de ce rayon lumineux modulé (3a) avec le rayon lumineux détecté (3b), et la position de cet objet au moyen de la position angulaire du miroir polygonal (5).

7. Procédé selon la revendication 6, **caractérisé en ce qu'**une séquence de signaux de bruit pseudo-aléatoire est utilisée pour la modulation du rayon lumineux (3a).
